# EUROPEAN PATENT SPECIFICATION

(11) **EP 1 357 556 B1**
(45) Date of publication and mention of the grant of the patent: **05.11.2014**
(21) Application number: 03290892.3
(22) Date of filing: 10.04.2003
(51) Int. Cl.: H04N 5/85

(54) **Recording media maintenance support**
Unterstützung zum Unterhalt von Aufzeichnungsmedien
Assistance d'entretien de supports d'enregistrement

(30) Priority: 22.04.2002 EP 02008969
(43) Date of publication of application: 29.10.2003
(73) Proprietor: Thomson Licensing, 92130 Issy-les-Moulineaux (FR)
(72) Inventor: Adolph, Dirk, 30952 Ronnenberg (DE); Kubsch, Stefan, 31559 Hohnhorst (DE); Winter, Marco, 30173 Hannover (DE); Blawat, Meinolf, 30659 Hannover (DE); Li, Hui, 30419 Hannover (DE); Schiller, Harald, 30539 Hannover (DE); Klausberger, Wolfgang, 30559 Hannover (DE); Ostermann, Ralf, 30167 Hannover (DE); Kochale, Axel, 31832 Springe (DE); Janssen, Uwe, 30926 Seelze (DE); Peters, Hartmut, 30890 Barsinghausen (DE); Hörentrup, Jobst, 30161 Hannover (DE)
(74) Representative: Thies, Stephan

(56) References cited:
- EP-A- 1 091 358
- EP-A- 1 107 588
- EP-A- 1 143 720
- EP-A- 1 195 768
- WO-A-00/05718
- US-B1- 6 360 057
- PATENT ABSTRACTS OF JAPAN vol. 2000, no. 22, 9 March 2001 (2001-03-09) & JP 2001 148155 A (SONY CORP), 29 May 2001 (2001-05-29)

## Description

The present invention relates to a method for maintaining storage media including the step of generating, editing or reading log data related to the content and/or usage of a data item stored or to be stored on a storage medium. Furthermore, the present invention relates to a device for recording data items on a storage medium.

### Background

The increase of media capacities for DVD (Digital Versatile Disk) and DVR (Disk for Digital Video Recording) provides new dimensions for the private recording. While in the past only two or three movies could be stored on a single recording medium like a VHS tape for example, in the future it will be possible to store much more movies on the larger volume capacities, e.g. 40 movies a disc. Another change is enforced by the fact that the storage medium for recording is a digital one and therefore different application contents like photo, audio, e-books and movies will be stored on the same single medium.

The handling of such a data amount is not easy for the user. In fact metadata (data about data) will be added to navigate within and to select the desired items, but there is no solution for the maintenance of data. What will happen when the medium becomes full and therefore a record task request cannot be executed? The user will have to delete some other data. This is a very unpleasant and also time-consuming task.

The reason for this is that the deleting of recorded material on a DVD or DVR has to be done manually. The user has to determine and explicitly select those date to be deleted.

### Invention

It is an object of the present invention to provide a method for managing data items on a storage medium in a more comfortable way and a device for recording data items on a storage medium using such a method.

According to the present invention, this object is solved by a method and a device as defined in the appended independent claims.

Further favourable developments of the inventive method are defined in the subclaims.

The present invention provides a method and a device for managing a deleting process. The management of deleting can be improved in two ways: during an interactive process of supporting the users deleting decision with recommendations or automatically in a background process when the medium space runs short.

An advantage of the present invention is that metadata may be generated on the recorder describing the usage of the essence (recordings). Hereby the word "essence" includes data like audio and video data, whereas metadata represent data related to the essence as additional date like links or, here, usage and deletion information. The metadata can, for example, be stored on the media comprising the essence the metadata is related to, or in the recorder itself. Based upon an analysis of the previously generated usage log metadata, it becomes possible to select recordings for deletion. In one solution the recorder can do the selection and deletion of essence automatically when storage space runs short. This will relieve the user from the deleting task.

Additionally it becomes possible to provide machine-generated recommendations for the user when he explicitly starts a deleting process. These machine-generated recommendations for deletion may be accepted by the user or declined partly or at a whole and depending on this decision a potentially complex deletion process can be executed in one machine task without further user action.

### Drawing

The present invention will now be described in more detail in connection with the attached drawing showing a flow chart for a maintenance profile generation.

### Exemplary Embodiments

According to a preferred embodiment of the present invention, prerequisite for providing a media maintenance to the user is the generation of means for a later analysis. This means are called Item Usage Logs (IUL; see Table 1). Every action initiated by the user and processed by the recorder will generate a new IUL or update an IUL. For example if the recorder is recording a new item or if an already recorded item is played back or if it is changed by editing, every time a IUL is generated or updated. All the Item Usage Logs are accumulated in a list available for every item.

The left column of table 1 shows the elements contained in every IUL. The element <action> logs the executed command, the user who executed it is included within <user>, the <date&time> stores time and date of execution, and if a stream is handled the part of the stream acted on is logged by <start> and <end>. The element <protection> represents a value for controlling the deletion process and is set to a default value from the recorder or to a specific one by the user directly (protection change) or by any action executed, e.g. if the item is played back from the user then it is marked to be deleted first by setting <protection> to 1.

**Table 1:**

| Explanation to Item Usage Log (IUL) | |
|---|---|
| **Element** | **Explanation / Example** |
| **<class>** | Item identification for video, audio, metadata, ... |
| **<user>** | User ID executing action |
| **<protection>** | Level 1 till k; 1 is the lowest protection |
| **<action>** | Record, playback, editing, protection, annotation,... |
| **<date&time>** | Of last action |
| **<start> for Streaming data** | Stream entry position |
| **<end> for Streaming data** | Stream exit position |

By using previously generated IULs it becomes possible to give maintenance support to the user. Here follows a list of possibilities considering user recommendations or automatically executed processes, which may be realised in specific embodiments:
1. When a user is playing back the same item for a second time the recorder can pop up a question after the playback and ask the user if this item should be treated individually by setting a higher protection level else set the item to be deleted first by setting the value to the lowest protection level.
2. Depending on the item <class> an application specific protection level can be selected, e.g. highest level for the recordings of private photos.
3. If an annotation is added to an item, i.e. when metadata or other items are linked to the item then increase the protection or pop up a question and ask the user for selecting the protection.
   When the storage space on the medium runs short:
4. For each item determine the count of uses. This is done for a selection criterion for automatic deletion.
5. Delete those items having the lowest protection and not being used for a time longer than N, where N can be a default or a user selected value.
6. Delete those items having the lowest protection and having already been played back.

A much more powerful media maintenance support for the user becomes possible by applying a more complex algorithm to the IULs. The basics of this algorithm are disclosed within the following.

To provide the advanced media maintenance support a list of rules, here called Global Protection Settings (see Table 2) is generated. Every Global Protection Setting (GPS) is globally available in a system and consists of three entries. The <descriptor> can be taken from the IUL elements or other metadata belonging to the item recorded such as genre, author, summary, type, etc. Associated to each <descriptor> a <criterion> is defined containing a logical rule, which is describing the GPS selection criterion. The third entry is called <level> and holds the resulting protection value when having applied the GPS.

Table 2 shows some GPS examples. The first GPS example says: when recording a new item set the protection level to "high", which is the highest value possible for the protection element in the IUL (i.e. <protection> = k). The third example in Table 2 determines that an item having an associated metadata actor "Clint Eastwood" should be set to protection level "medium". This is equivalent to <protection> = k/2. In row five of Table 2 there is an example, which could be examined automatically by the recorder when the storage runs short to determine an item and delete it. When the difference between the actual date and the metadata recording date is greater than two weeks for an item set protection level to "low". This would be <protection> = 1 and the item would be deleted.

**Table 2:**

| Examples for Global Protection Settings | | |
|---|---|---|
| **<descriptor>** | **<criterion>** | **<level>** |
| iul.action | .eq. Record | "high" |
| iul.action | .eq. playback | "low" |
| actor | .eq. "Clint Eastwood" | "medium" |
| summary | contains "history" | "high" |
| recording date | .1t. "current - 2 weeks" | "low" |
| title | .eq. "Tagesschau" | "high" |
| production date | .1t. "1970" | "high" |

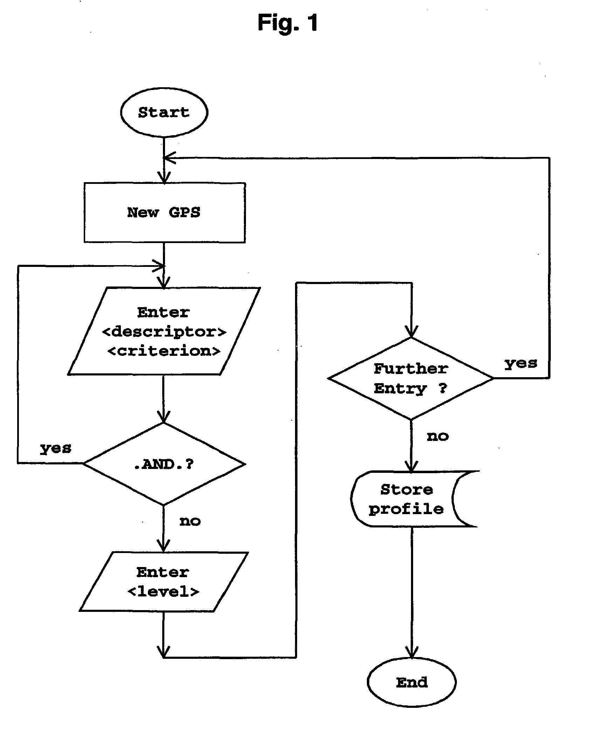

The GPSs are used to set up a maintenance profile for one or more recording media. The profile may be stored in the recorder for plural recording media or on each recording medium individually. An algorithm for the maintenance profile generation is depicted in Figure 1. A new GPS is generated in step 1. The values of the GPS have to be entered in the following steps. In step 2 the descriptor and the criterion is entered. In step 3 it has to be decided whether several descriptors and criteria have to be combined. If the decision is "yes" two or more descriptors and criteria are linked by the logical operator "and". After combining several descriptors and criteria the level of the protection level indicator has to be entered in step 4. In step 5 it has to be decided whether a further GPS has to be input into the maintenance profile. If the decision is "yes", the process returns to step 1. If the decision is "no", the process proceeds further to step 6, where the profile is stored in the recorder or on the recording medium.

As can be seen from the flow chart an accumulation of different descriptors and criteria is possible for a single GPS rule. This is a very powerful tool and allows defining replacement recordings for instance for which the following example is given. If one wants to keep the most actual version of a specific news program for two weeks and to delete all older versions one needs a combined GPS. This can be provided by the combination of row five and row six in Table 2. The level of this combined GPS would be "low" to give rise to the deletion. If it comes true that more than one GPS must be applied to a single item the GPS processing order, for example the order 1 to 7 of table 2, will determine the final result of the level for this item. Alternatively, the level of a combined GPS rule may be calculated form the levels of the plural GPSs which are combined. The level for the combined GPS may be calculated to the medium of the GPSs concerned.

By using the GPSs it becomes possible to give maintenance support to the user. Here follows another list of possibilities considering user recommendations or automatically executed processes:
7. The recorder can use already available metadata for maintenance.
8. The recorder can create its own metadata (e.g. IUL) for maintenance purposes.
9. The recorder can generate an independent maintenance profile for each medium. For example every DVR disc has its own maintenance profile.
10. The user can specify the highest protection level by defining k for each medium.
11. The user can specify protection levels depending on the <class> for each item. This can be used for example to keep all photos but to delete all videos first when necessary due to storage shortage.
12. By using combinations of GPSs the user can set up complex maintenance tasks automatically executed by the recorder, e.g. automatic replace recordings.

Thus, the present invention provides an improved user interface, which becomes important when a recording medium is holding a huge amount of different application items. The maintenance of all these data is not left up to the user, who would have to get rid of obsolete items by deleting everything by hand. For this purpose metadata are created and deposited for example on a storage medium. Such metadata can be exported, for example in the XML format and further used for user supporting interface techniques, automated substitution, deleting, proposing for protection etc.

With the inventive system the rules for deletion are adaptable to user preferences. Since, furthermore, the data items may be deleted completely, most maintenance work can be done automatically.

The present method is applicable to all storage media containing more than one item. That could be for example a hard disk, a tape, any RAM, etc. Prerequisite is the generation of the Usage Log or another log data unit for every item.

## Claims

1. A method for managing data items on a storage medium, the method comprising:
- generating, editing or reading metadata related to content of a data item stored or to be stored on a storage medium;
- generating, editing or reading metadata related to usage of the data item;
- determining a first protection level for the data item based on the metadata related to content of the data item, wherein the first protection level indicates a level of protection against deletion of the data item from the storage medium;
- determining a second protection level for the data item based on the metadata related to usage of the data item, wherein the second protection level indicates a level of protection against deletion of the data item from the storage medium;
- calculating a combined protection level for the data item from the first protection level and the second protection level, wherein the combined protection level indicates a final level of protection against deletion of the data item from the storage medium; and
- deleting completely and automatically at least a part of the data item or providing a recommendation to a user to delete at least a part of the data item on the basis of the combined protection level.

2. The method according to claim 1, wherein the metadata related to content of the data item includes a protection level indicator.

3. The method according to claim 1 or 2, wherein the metadata related to content of the data item or the metadata related to usage of the data item includes at least one of class, user, usage, time and/or streaming information.

4. The method according to claim 3, wherein the class information includes an item identification for video data, audio data and/or metadata.

5. The method according to one of claims 3 or 4, wherein the time information includes the date and time of the last usage of the data item.

6. The method according to one of claims 3 to 5, wherein the streaming information includes a stream entry position and a stream exit position.

7. The method according to one of claims 2 to 6, wherein the combined protection level is calculated according to one or more predetermined rules or combinations of predetermined rules being used in a predetermined order.

8. The method according to claim 7, further comprising creating (1) or editing (2, 4) said rules.

9. The method according to claim 7 or 8, wherein said rules include a descriptor for an element forming a basis of decision, a criterion for the decision and a protection level as a result of the decision.

10. The method according to one of claims 7 to 9, further comprising storing (6) the metadata related to content of the data item, the metadata related to uasge of the data item, and/or said rules for decision on said recording medium or on a data processing system.

11. A device for recording data items on a storage medium, wherein the device is configured to:
- generate, edit or read metadata related to content of a data item stored or to be stored on a storage medium;
- generate, edit or read metadata related to usage of the data item;
- determine a first protection level for the data item based on the metadata related to content of the data item, wherein the first protection level indicates a level of protection against deletion of the data item from the storage medium;
- determine a second protection level for the data item based on the metadata related to usage of the data item, wherein the second protection level indicates a level of protection against deletion of the data item from the storage medium;
- calculate a combined protection level for the data item from the first protection level and the second protection level; and
- delete completely and automatically at least a part of the data item or provide a recommendation to a user to delete at least a part of the data item on the basis of the combined protection level.

## Patentansprüche

1. Verfahren zum Verwalten von Dateneinheiten in einem Speichermedium, wobei das Verfahren umfasst:
- Erzeugen, Editieren oder Lesen von Metadaten in Bezug auf den Inhalt einer in einem Speichermedium gespeicherten oder zu speichernden Dateneinheit;
- Erzeugen, Editieren oder Lesen von Metadaten in Bezug auf die Nutzung der Dateneinheit;
- Bestimmen eines ersten Schutzniveaus für die Dateneinheit auf der Grundlage der Metadaten in Bezug auf den Inhalt der Dateneinheit, wobei das erste Schutzniveau ein Niveau des Schutzes vor Löschung der Dateneinheit von dem Speichermedium angibt;
- Bestimmen eines zweiten Schutzniveaus für die Dateneinheit auf der Grundlage der Metadaten in Bezug auf die Nutzung der Dateneinheit, wobei das zweite Schutzniveau ein Niveau des Schutzes vor Löschung der Dateneinheit von dem Speichermedium angibt;
- Berechnen eines kombinierten Schutzniveaus für die Dateneinheit aus dem ersten Schutzniveau und aus dem zweiten Schutzniveau, wobei das kombinierte Schutzniveau ein Endniveau des Schutzes vor Löschung der Dateneinheit von dem Speichermedium angibt; und
- vollständiges und automatisches Löschen mindestens eines Teils der Dateneinheit oder Bereitstellen einer Empfehlung für einen Nutzer, mindestens einen Teil der Dateneinheit zu löschen, auf der Grundlage des kombinierten Schutzniveaus.

2. Verfahren nach Anspruch 1, wobei die Metadaten in Bezug auf den Inhalt der Dateneinheit einen Schutzniveauindikator enthalten.

3. Verfahren nach Anspruch 1 oder 2, wobei die Metadaten in Bezug auf den Inhalt der Dateneinheit oder die Metadaten in Bezug auf die Nutzung der Dateneinheit Klassen- und/oder Nutzer- und/oder Nutzungs- und/oder Zeit- und/oder Streaming-Informationen enthalten.

4. Verfahren nach Anspruch 3, wobei die Klasseninformationen eine Einheits-Kennung für Videodaten, Audiodaten und/oder Metadaten enthalten.

5. Verfahren nach einem der Ansprüche 3 oder 4, wobei die Zeitinformationen das Datum und die Zeit der letzten Nutzung der Dateneinheit enthalten.

6. Verfahren nach einem der Ansprüche 3 bis 5, wobei die Streaming-Informationen eine Datenstrom-Eintrittsstelle und eine Datenstrom-Austrittsstelle enthalten.

7. Verfahren nach einem der Ansprüche 2 bis 6, wobei das kombinierte Schutzniveau in Übereinstimmung mit einer oder mehreren vorgegebenen Regeln oder Kombinationen vorgegebener Regeln, die in einer vorgegebenen Reihenfolge verwendet werden, berechnet wird.

8. Verfahren nach Anspruch 7, das ferner das Erstellen (1) oder das Editieren (2, 4) der Regeln umfasst.

9. Verfahren nach Anspruch 7 oder 8, wobei die Regeln einen Deskriptor für ein Element, der eine Grundlage der Entscheidung bildet, ein Kriterium für die Entscheidung und ein Schutzniveau im Ergebnis der Entscheidung enthalten.

10. Verfahren nach einem der Ansprüche 7 bis 9, das ferner das Speichern (6) der Metadaten in Bezug auf den Inhalt der Dateneinheit, wobei sich die Metadaten auf die Nutzung der Dateneinheit beziehen, und/oder der Regeln für die Entscheidung in dem Aufzeichnungsmedium oder in einem Datenverarbeitungssystem umfasst.

11. Vorrichtung zum Aufzeichnen von Dateneinheiten in einem Speichermedium, wobei die Vorrichtung konfiguriert ist zum:
- Erzeugen, Editieren oder Lesen von Metadaten in Bezug auf den Inhalt einer in einem Speichermedium gespeicherten oder zu speichernden Dateneinheit;
- Erzeugen, Editieren oder Lesen von Metadaten in Bezug auf die Nutzung der Dateneinheit;
- Bestimmen eines ersten Schutzniveaus für die Dateneinheit auf der Grundlage der Metadaten in Bezug auf den Inhalt der Dateneinheit, wobei das erste Schutzniveau ein Niveau des Schutzes vor Löschung der Dateneinheit von dem Speichermedium angibt;
- Bestimmen eines zweiten Schutzniveaus für die Dateneinheit auf der Grundlage der Metadaten in Bezug auf die Nutzung der Dateneinheit, wobei das zweite Schutzniveau ein Niveau des Schutzes vor Löschung der Dateneinheit von dem Speichermedium angibt;
- Berechnen eines kombinierten Schutzniveaus für die Dateneinheit aus dem ersten Schutzniveau und aus dem zweiten Schutzniveau; und
- vollständiges und automatisches Löschen mindestens eines Teils der Dateneinheit oder Bereitstellen einer Empfehlung für einen Nutzer, mindestens einen Teil der Dateneinheit zu löschen, auf der Grundlage des kombinierten Schutzniveaus.

## Revendications

1. Un procédé de gestion d'éléments de données sur un support de stockage, le procédé comprenant :
- la génération, la modification ou la lecture de métadonnées associées au contenu d'un élément de données stocké ou à stocker sur un support de stockage ;
- la génération, la modification ou la lecture de métadonnées associées à l'utilisation de l'élément de données ;
- la détermination d'un premier niveau de protection de l'élément de données en fonction des métadonnées associées au contenu de l'élément de données, dans lequel le premier niveau de protection signale un niveau de protection contre la suppression de l'élément de données en provenance du support de stockage ;
- la détermination d'un second niveau de protection de l'élément de données en fonction des métadonnées associées à l'utilisation de l'élément de données, dans lequel le second niveau de protection signale un niveau de protection contre la suppression de l'élément de données en provenance du support de stockage ;
- le calcul d'un niveau de protection combiné pour l'élément de donnée en provenance du premier niveau de protection et du second niveau de protection, dans lequel le niveau de protection combiné indique un niveau final de protection contre la suppression de l'élément de données en provenance du support de stockage ; et
- la suppression complète et automatique d'au moins une partie de l'élément de données ou la communication d'une recommandation à un utilisateur pour supprimer au moins une partie de l'élément de données en fonction du niveau de protection combiné.

2. Le procédé selon la revendication 1, dans lequel les métadonnées associées au contenu de l'élément de données comprennent un indicateur de niveau de protection.

3. Le procédé selon l'une des revendications 1 ou 2, dans lequel les métadonnées associées au contenu de l'élément de données ou les métadonnées associées à l'utilisation de l'élément de données comprennent au moins une des informations sur la catégorie, l'utilisateur, l'utilisation, l'heure et/ou le flux.

4. Le procédé selon la revendication 3, dans lequel les informations de catégorie comprennent une identification d'élément pour les données vidéo, les données audio et/ou les métadonnées.

5. Le procédé selon l'une des revendications 3 ou 4, dans lequel les informations d'heure comprennent la date et l'heure de la dernière utilisation de l'élément de données.

6. Le procédé selon l'une des revendications 3 à 5, dans lequel les informations de flux comprennent une position d'entrée de flux et une position de sortie de flux.

7. Le procédé selon l'une quelconque des revendications 2 à 6, dans lequel le niveau de protection combiné est calculé selon une ou plusieurs règles prédéterminées ou combinaisons de règles prédéterminées étant utilisées dans un ordre prédéterminé.

8. Le procédé selon la revendication 7, comprenant en outre, la création (1) ou la modification (2,4) desdites règles.

9. Le procédé selon l'une des revendications 7 ou 8, dans lequel lesdites règles comprennent un descripteur pour un élément formant une base de décision, un critère pour la décision et un niveau de protection comme résultat de la décision.

10. Le procédé selon l'une quelconque des revendications 7 à 9, comprenant en outre le stockage (6) des métadonnées associées au contenu de l'élément de données, les métadonnées associées à l'utilisation de l'élément de données, et/ou lesdites règles de décision concernant ledit support d'enregistrement ou un système de traitement des données.

11. Un dispositif pour l'enregistrement des éléments de données sur un support de stockage, dans lequel le dispositif est configuré pour
- générer, modifier ou lire des métadonnées associées à un contenu d'un élément de données stocké ou à stocker sur un support de stockage ;
- générer, modifier ou lire des métadonnées associées à l'utilisation de l'élément de données ;
- déterminer un premier niveau de protection de l'élément de données en fonction des métadonnées associées au contenu de l'élément de données, dans lequel le premier niveau de protection signale un niveau de protection contre la suppression de l'élément de données en provenance du support de stockage ;
- déterminer un second niveau de protection de l'élément de données en fonction des métadonnées associées à l'utilisation de l'élément de données, dans lequel le second niveau de protection signale un niveau de protection contre la suppression de l'élément de données en provenance du support de stockage ;
- calculer un niveau de protection combiné pour l'élément de données en provenance du premier niveau de protection et du second niveau de protection ; et
- supprimer complètement et automatiquement au moins une partie de l'élément de données ou la communication d'une recommandation à un utilisateur pour supprimer au moins une partie de l'élément de données en fonction du niveau de protection combiné.
